# EUROPEAN PATENT APPLICATION

(11) **EP 3 992 511 A1**
(43) Date of publication of application: **04.05.2022**
(21) Application number: 21204034.9
(22) Date of filing: 21.10.2021
(51) Int. Cl.: F16L 13/14, F16L 33/22

(54) **PRESS FITTING WITH AXIAL PUSH**

(30) Priority: 27.10.2020 LU 102157
(71) Applicant: Aliaxis Research & Technology, 78990 Élancourt (FR)
(72) Inventor: ABDULHAMEED, Hemin, 78540 Vernouillet (FR); COMTE, Dominique, 78540 Vernouillet (FR); TEIXEIRA PINTO, José, 78540 Vernouillet (FR)
(74) Representative: Sonnenberg Harrison Partners

(57) **Abstract**

The present invention proposes a press fitting for the connection of a pipe in a piping system for hot and cold-water installations inside buildings, comprising a main body (10) with a fitting support (15) extending in an axial direction along a central axis from a mechanical fitting portion (12) to a pipe insertion end side, an internal sleeve (20) and an external sleeve (30). The internal sleeve (20) and the fitting support defines a pipe insertion space for inserting a pipe end to be fixed on said fitting support. The external sleeve (30) is configured to move axially over the internal sleeve (20), said axial movement resulting in an inward radial force allowing to provide a secure engagement of the internal sleeve with the pipe end, preferably also leading to the crimping of the pipe end against the fitting support

## Description

### Cross-reference to related applications

This application claims priority of Luxembourg patent application No. LU102157 filed on 27 October 2020. The entire disclosure of Luxembourg patent application No. LU102157 is hereby incorporated herein by reference.

### Field of the invention

The present invention concerns compression fittings or press fittings. The present invention also concerns a method of assembly of such press fittings and a tool for assembly of press fittings for pipes intended to transport gases and liquids.

Compression fittings, also called press fittings, which can connect pipes by compression and deformation using one or two sleeves, are well known in the field of tubing, piping and line system installation, for example, for water, gas or heating.

Press fittings are used to connect not only pipes made of metal but also pipes made of plastic or composite metal-plastic. They are used to connect appropriately arranged sections of pipe, with their connecting pieces being inserted into the ends of the pipes to be connected, where they are then de-formed or crimped or pressed. They are fastened in certain fastening zones on the connection pieces by using so-called system compression tools that usually have interchangeable pressing jaws.

The pipe, tube or conduit systems are assembled in several steps: first an end of the pipes is inserted into a fitting, and then the fitting is crimped to guarantee good mechanical strength and a leak-tight installation. The compression is essentially a pressure on the fitting sleeve which causes the deformation or shaping of the fitting to the pipe which is inserted into it. The pressure is usually applied to the fitting using a crimping tool with press jaws. These pressing jaws apply pressure to the fitting material in order to bring about an interaction with the surface of the pipe(s)/pipe(s) to be connected, thus achieving a reliable connection and a reliable seal. In some cases, the crimping also involves a deformation of the tube or piping itself in order to provide an interaction between the tube and an inner part of the fitting.

For multilayer pipes high pressure force is generally required during the crimping process, typically in the range of 20 to 30 kN. This amount of force is obtained using a heavy mechanical tool, typically weighting 5 to 7 kilograms.. It may be difficult for a user to handle such a heavy tool all day and sometimes at locations which are not easy to reach. A repetitive task of crimping with a heavy tool combined with the working condition during installation can adversely affect the health of user and impair the connection quality.

One object of the present invention is to reduce the amount of force required during the crimping process, therefore of the energy the tool needs to apply.

It is another object of the present invention to provide a secure connection of at least one tube or pipe, in particular part of a multilayer piping systems such as for hot and cold-water installations inside buildings.

### Summary of the invention

To this end, the present invention proposes a mechanical fitting according to claim 1, a method of according to claim 14, and a crimping tool for said mechanical fitting as defined in claim 16. Preferred embodiments are defined in the dependent claims.

In particular, the invention proposes a press fitting for the connection of a pipe, comprising a main body with a fitting support extending in an axial direction along a central axis from a mechanical fitting portion to a pipe end side, an internal sleeve and an external sleeve, wherein the internal sleeve and the fitting support defines a pipe insertion space for inserting a pipe end to be fixed on said fitting support, and wherein the external sleeve is configured to slide axially over the internal sleeve towards the pipe end side. The external sleeve is designed to move axially in the direction from the fitting portion to the pipe insertion end, said axial movement resulting in an inward radial force leading to the crimping of the pipe end against the fitting support. However, a movement in the other direction could be envisaged.

In one embodiment, the internal sleeve is configured to undergo a diameter reduction during axial movement of the external sleeve to translate the axial displacement of the external sleeve into an inward radial displacement of at least one, preferably several circumferential parts/portions of the internal sleeve to compress the internal sleeve against the pipe and preferably also the pipe against the fitting support.

In one aspect, the external surface of internal sleeve has a conical shape profile defining an angle Θ with respect to the axial direction, with a smaller diameter on the external sleeve rest position side, in particular the external sleeve rest position being on the fitting side and the larger diameter being on the open-end side (pipe insertion side). A conical shape allows maintaining the pipe in place during the movement of the external sleeve from the fitting towards the pipe. The distances and size of the teeth are related to this and to the gripping capacity.

In an aspect, the angle is chosen as a function of the diameter of the pipe to be connected, wherein for nominal diameters of 16 to 60 mm, the angle (Θ) can be varying from 1 to 25 °, preferably from 2° to 21°. This angle range allows obtaining a crimping force required for crimping the tube end on the fitting support.

In yet a further embodiment, the internal sleeve is provided with one or more axial slot(s), preferably regularly spaced apart from each other in the circumferential direction. The slots may be distributed circumferentially at equidistance, wherein the length of the slots is depending on the distance between inner projections, and the width of slots depending on the angle. The axial slots absorb the diameter reduction absorbed by the of internal sleeve during the crimping process. In addition, the axial slot may further provide a visual monitoring window of good insertion of the pipe.

In one aspect, the internal sleeve has an inner surface with a plurality of inner projections projecting towards the fitting body, preferably at different depths. The internal sleeve has an inner surface with a plurality of inner projections, the projections preferably with different depths, wherein the projection grip and maintain the pipe to prevent the jeopardize the insertion level of the pipe while the external sleeve sliding on the internal sleeve. The projections advantageously allocate more deformation locally on the pipe which tend to a reliable connection even without O-ring rubber joint.

In one aspect, one or more stoppers are provided to fix the internal sleeve axially on the main body wherein the internal sleeve optionally is free to rotate around the central axis. In another aspect, the external sleeve is positioned to the internal sleeve designed to receive the external sleeve via a slight interface between the external sleeve and the internal sleeve.

In one aspect, the press fitting further comprising an abutting element for stopping the external sleeve in the crimping position, preferably the abutting element being located on the internal sleeve. The abutting element helps positioning correctly the external sleeve to ensure that the crimping process has been completed. In addition this can provide for a visual indication of fully crimping when the external sleeve reaches the abutting element.

The present invention therefore proposes a compact mechanical fitting preassembled in comparison with others axial crimp technology. This is easier for the plumbers which can use directly the press-fitting without having to place the sleeve over the pipe before assembly. In addition, the movement allowing the crimping is a movement from the fitting portion towards the pipe end of the press fitting, contrary to the crimping process of the prior art.

The pipe or tube can be mono material and made of thermoplastic materials including but not limited to PE, PB, PEX, PERT, PER, ... or Composite (multi material tube structure) with different layers of functional materials (PEX, PERT, PVDF, Aluminum...). The material for the fitting body can be metal (brass, Stainless steel....) Thermoplastic (PVC, PPSU, PVDF PPS), that can also be reinforced with fiber glass reinforcement. It is important to consider that the material of the fitting body must be harder than the material of the pipe surface in contact with the fitting body.

The body can be made from brass or polymer.

It should be noted that there is no need for pipe preparation if the fitting body does not contain an O-ring.

The present invention also proposes a method of connecting a press fitting with a pipe, comprising the steps of : 1) inserting the pipe into a pipe insertion space between a fitting support and an internal sleeve, 2) displacing axially an external sleeve over the internal sleeve, so that the internal sleeve undergoes a diameter reduction during axial movement of the external sleeve to translate the axial displacement of the external sleeve into an inward radial displacement of the internal sleeve to compress the internal sleeve against said pipe, preferably also the pipe against the fitting support.

It should be noted that the external sleeve is sliding from the fitting portion to the pipe end in a preferred embodiment. A movement in the other direction could be envisaged.

The axial displacement may be obtained by axially driving the external sleeve over the internal sleeve. The axial displacement may also be obtained by a rotation of the external sleeve over threads.

The present invention also proposes a crimping tool for connecting a press fitting as described above with a pipe and/or to be used in performing a method as described above. The crimping tool comprises a movable part and a fixed part, the fixed part being configured to maintain axially the internal sleeve of the press fitting, and the movable part being configured to push axially the external sleeve towards the fixed part, in other word from the body side to the pipe side, so that the external sleeve is driven or slides over the internal sleeve.

The crimping process can be achieved with a small displacement of tool sliding the external sleeve from body side toward the pipe side. The movement of the tool is from the fittings toward the pipe and not the opposite. The displacement needed to complete the crimping is very small therefore with a low load resulting in a very low energy. Low energy will result in less robust tools and lighter tools.

It requires much less energy to connect multilayer pipes in comparison with existent mechanical fitting, the amount of energy reduction is up to 80 %.

This technology has great impact on the crimping tool, by reducing very considerably the weight of crimping tool to become lighter, more ergonomic, and increase its lifetime.

This technology has great impact on health and performance of installer with lighter and more ergonomic tool.

In addition, it is possible to have a handheld crimping tool which does not need to be electrically powered. A low crimping energy with small displacement provide for low force to perform the crimping, in a consequence, a light tool with less need to be robust can be conceived.

### Brief Description of the figures

Other characteristics and advantages of the invention will be more clearly evident upon reading the description of several currently preferred embodiments, provided as examples only, with reference to the attached drawings, wherein:
- Figure 1 shows a press fitting according to a first aspect of the present invention,
- Figure 2 is a cross section of the press fitting of Fig. 1,
- Figure 3A is an view of an internal sleeve and Figure 3B is a cross section of an internal sleeve of the press fitting of Fig. 1,
- Figure 4 is an explanation of the conical shape of the internal sleeve of Figs. 1 to 3,
- Figures 5A to 5C show respectively a front cross section view, a front view and an isometric view of a press fitting according to another aspect of the present invention,
- Figure 6 shows a crimping process according to one aspect of the invention,
- Figure 7 shows a crimping tool for use with a press fitting of the present invention or in a crimping process of the present invention.

In the figures, identical parts are identified using the same reference numbers.

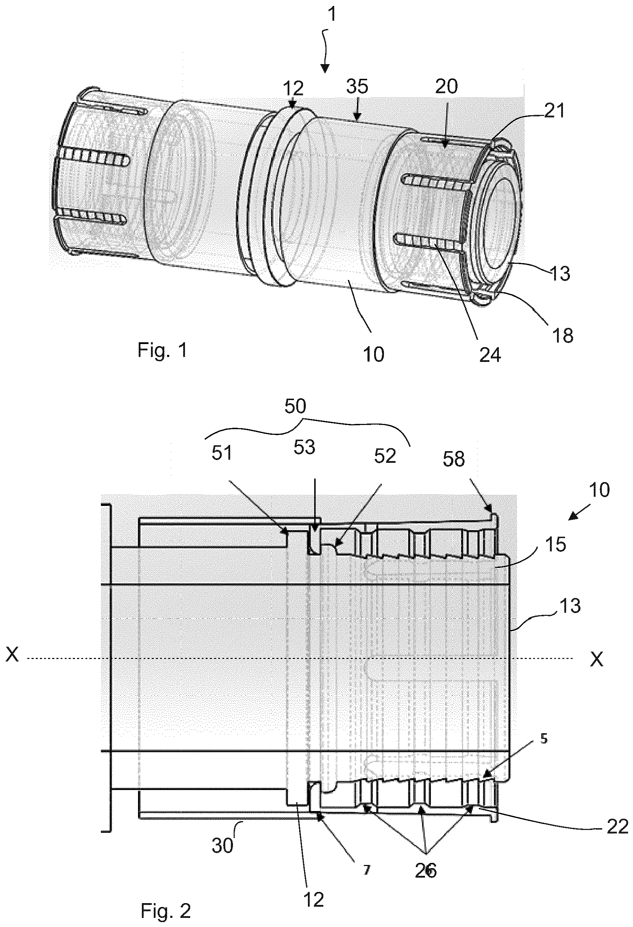

Figure 1 shows a press fitting 1 allowing the connection of a pipe 5 according to one aspect of the present invention. The pipe may be for example a multilayer pipe of a multilayer piping systems for hot and cold-water installations inside buildings. The fitting may form one side of a connector having similar or another kind of fitting on its other end or side. The fitting may also be provided at a port of a fluidic device for connecting a pipe thereto.

The mechanical fitting comprises a main body 10 for receiving a pipe end to be connected, an internal sleeve 20 provided to be crimped on the pipe end and an external sleeve 30 configured to slip/slide axially over the internal sleeve 20 during the crimping process.

The main body 10 comprises a fitting portion 12 with a fitting support 15 extending axially from the fitting portion 12. The fitting support 15 extends in the axial direction X-X between said fitting portion 12 and a pipe insertion end 13.

The fitting support has a plurality of radial recesses extending on its outer circumference, to grip the pipe. This ensures the sealing of the press fitting without O-ring.

As will be explained, the external sleeve 30 is positioned on the internal sleeve 20 and the internal sleeve 20 fixed on the main body 10 as shown in Figure 1.

The internal sleeve 20 is designed to surround the fitting support 15. The fitting support 15 and the internal sleeve 20 defines an insertion space 18 for the insertion of the pipe end to be fixed.

The internal sleeve 20 is configured to be deformed during axial movement of the external sleeve 30 to attach the pipe end to the fitting support 15. More precisely, the internal sleeve 20 is configured to undergo a diameter reduction during axial movement of the external sleeve 30. With other words, the internal sleeve 20 is configured to translate an axial displacement of the external sleeve 30 into an inward radial displacement which compresses the pipe against the body 10.

The internal sleeve 20 has an external envelope 21 with a conical shape, with a smaller diameter on the fitting side and a larger diameter on the open-end side (pipe insertion end side), defining an angle Θ. when the external sleeve is designed to move axially in the direction from the fitting portion to the pipe insertion end.

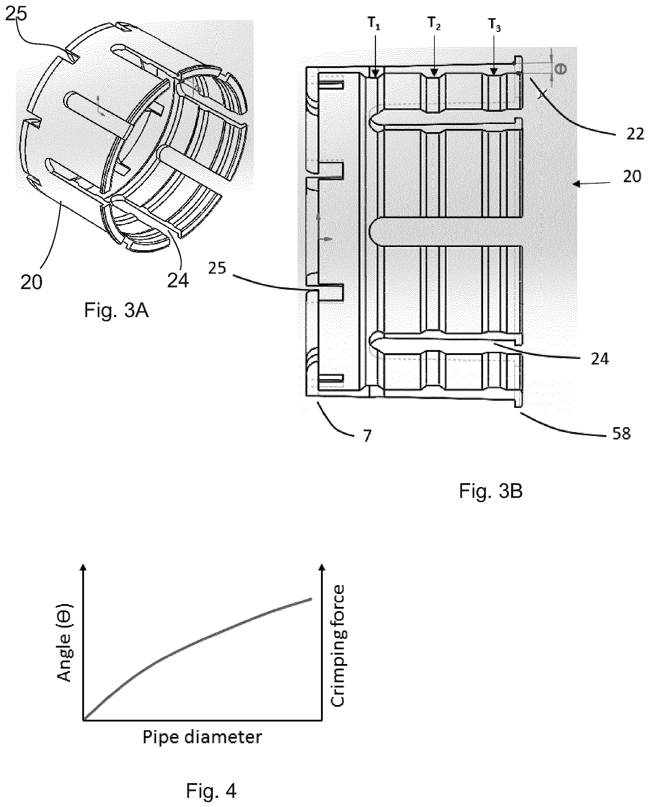

The angle Θ has a range varying between 2° to 30°. Preferably the angle is chosen as a function of pipe diameter.
The angle (Θ) depends on the diameter of the pipe, for nominal diameters of 16 to 60 mm, the angle (Θ) can be varying from 2° to 21°.The crimping force is a function of angle (Θ). The relationship between pipe diameter, angle (Θ)and crimping force is illustrated in Figure 4.

The internal sleeve 20 is provided with a plurality of axial slots 24. Preferably the axial slots 24 are regularly spaced apart from each other in the circumferential direction. The axial slots allow absorbing the internal sleeve diameter reduction and provide monitoring window for correct pipe insertion.

The internal sleeve 20 has an inner surface 22 with a plurality of inner projections 26 projecting towards the fitting body. The projections 26 are designed to grip and maintain the pipe during crimping process.

In the example of Figs. 1 to 3A, 3B, the inner surface 22 is circular and the projections 26 are circular and continuously extending along the internal circumference of the inner surface 22. The projections may be continuous over the entire circumference of the inner surface or may comprise a plurality of inner spots. In the present example, there are three projections and the inner surface has a circular shape, but this is not limiting the invention.

The projections 26 have different depth T1, T2, and T3 as best seen on Figure 3B. The projections 26 are in an accordance with the conical-shape angle (Θ) of the external envelope 21 of said internal sleeve 20.

The projection(s) 26 will grip and maintain the pipe during the movement of sliding the external sleeve over the internal sleeve. The projections also provide locally extra deformation of the pipe against the fitting support of the main body.

Preferably, the projections are distributed at equal distance one from the other from the beginning to the end of conical shape.

The depth of projections can be varying from 0.2 mm to 3 mm depending on the angle (Θ) and on the diameter of the pipe.

The width of projection can be varying from 1.5 mm to 6 mm depending on the angle (Θ) and on the diameter of pipe.

The skilled person will understand that the inner projections 26 avoid backward movement of the pipe during crimping process. In addition, the projections provide locally extra reduction of the pipe diameter once crimped, which increase the tightness of joint.

One or more stopper 50 are provided to fix the internal sleeve 20 axially on the body 10. The stoppers 50 are designed to fix the internal sleeve axially but optionally allow the internal sleeve to turn freely around the central axis.

In the example of Fig. 1 two stops elements 51, 52 define a stop gap receiving a corresponding stop element 53 on the internal sleeve 20. This is not limiting the invention and any cooperating elements, such as a recess and a projection, can be envisaged for fixing the internal sleeve 20 to the main body 10. However, the shown configuration allows for an easy assembly of the fitting whilst ensuring that once the inner sleeve is mounted to the body it can hardly be deteriorated or be lost in light of a snap fitting secured by the outer sleeve.

The internal sleeve 20 could be injected as part of main body 10.

In addition, the internal sleeve 20 comprises an abutting element 58 configured to stop the movement of the external sleeve 30 at the second crimping position during the crimping process. The abutting element 58 also provides a visual indication that the mechanical fitting is correctly crimped and no need further advancement of sleeve.

The mechanical fitting is designed to provide permanent connection. When the external sleeve is sliding over the internal sleeve, it is not possible to mount and unmount the mechanical fitting. On the other hand, when the axial displacement of the external sleeve is obtained by a rotation of the external sleeve over threads on the internal sleeve, the mechanical fitting can be unmounted again.

A reliable fitting can be obtained if the pipe end has been fully inserted into the pipe insertion space until the fitting section, and the sleeve has been completely displaced for crimping. If for any reason the mechanical fitting is not fully crimped or unmounted, one or more visual indicators can be provided indicating that the connection has not been made properly and is not a reliable connection. For example, a first visual indicator can be placed on the body and hidden by the external sleeve before crimping and that will be visible after the sleeve has been fully displaced. Or another visual indicator can be placed behind the abutting element 58 that will be visible if the external sleeve not completely displaced. The visual indicator may comprise different colours, or marks or signs.

The external sleeve 30 is designed to move axially during the crimping process, from a first axial position to a second axial position in which the external sleeve overlaps the internal sleeve 20. The external sleeve 30 has an internal diameter 30 inferior to the larger diameter of the external envelope of the internal sleeve.

The external sleeve 30 of Figures 1, 2, 3A, and 3B is designed to be sliding axially over the internal sleeve 20. When the external sleeve starts to slide, it produces enough interfaces between the external sleeve 30 with internal sleeve 20 and the internal sleeve 20 with the pipe via the projections 26 to prevent the rotation of the external sleeve 30.

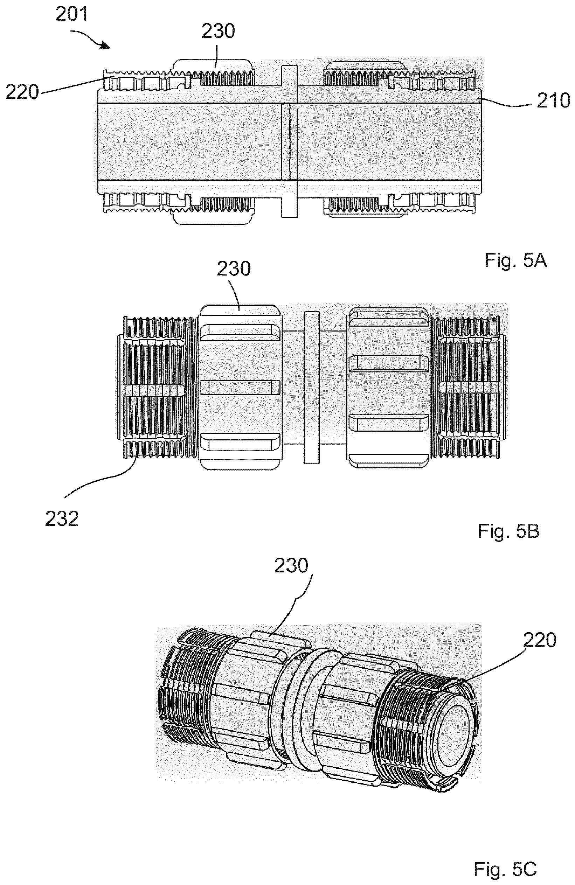

In another embodiment shown on Fig. 5A to 5C, the mechanical fitting 201 comprises a main body 210 for receiving a pipe end to be connected, an internal sleeve 220 provided to be crimped on the pipe end and an external sleeve 230 configured to rotate and move axially over the internal sleeve 220 during the crimping process. Specifically, the external sleeve 230 is designed to rotate over the internal sleeve 220 via threads 232. In this embodiment, the crimping process will happen by means of rotating the external sleeve 230 over internal sleeve 220, instead of sliding it in the axial direction over the internal sleeve in the embodiment of Fig. 1 to 3.

It should be noted that any type of threads can be envisaged, such as plastic or metal threads.

The external sleeve can have an external shape designed to allow a cooperation with any span tool currently available as standard tool, for example an hexagonal shape. Having a rotating external sleeve allows avoiding the need for a special crimping tool to apply the crimping force and perform the crimping process. Instead, the crimping process could be performed using any span tool exist in plumber toolbox.

As seen on Figures 3A and 3B, the external sleeve 30 is positioned on the internal sleeve 20 by a sleeve set 7. The sleeve set 7 is designed to receive the external sleeve via slots 25 and a slight interface between the external sleeve 30 and internal sleeve 20 without affecting crimping process.

During pre-assembling of the press fitting, the external sleeve is positioned on internal sleeve to be ready for using as preassembled parts. The external sleeve is positioned so that the external sleeve can be driven or slide over the internal sleeve during crimping process.

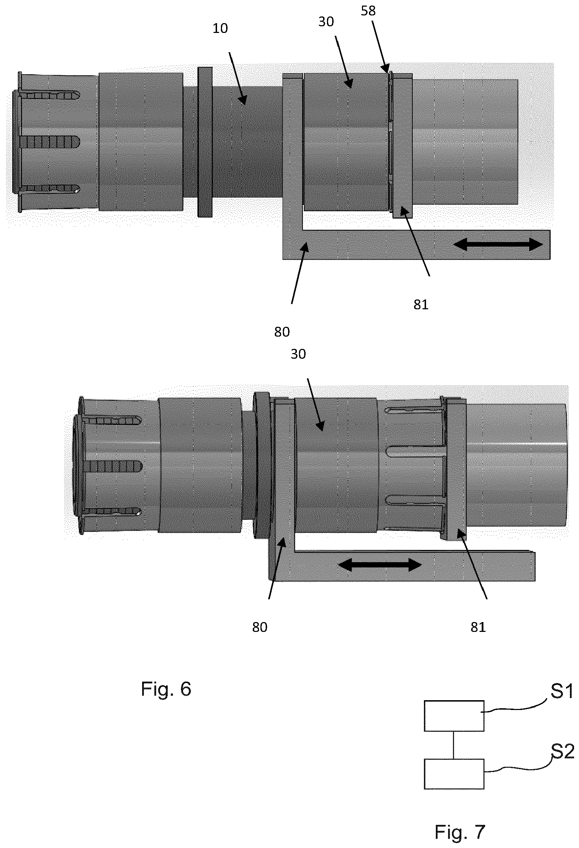

During the crimping process as detailed in Fig. 7, the pipe end to be connected to the fitting 1 is inserted on the fitting support 15, into insertion space 18 defined by the fitting support and the internal sleeve 20.

In a second step, the external sleeve 30 is moved axially to slide towards the pipe side end in order to cover the internal sleeve 20. During this axial movement, the external sleeve 30 is driven or slips or slides axially over the internal sleeve 20, pushing radially and axially on the internal sleeve. As a result, the internal sleeve 20, with its external conical-shape and axial slots, undergo a reduction of diameter, following the inward movement of internal sleeve. The reduction of diameter of the internal sleeve 20 produces an important amount of radial force, acting to crimp the pipe end against the fitting support on the one hand and possibly a penetration of the projections into the outer surface of the tube.

It should be noted that the perimeter length of the inner sleeve remains unchanged during deformation of the conical shape.

The external sleeve 30 has a cylindrical shape, the internal sleeve 20 has a conical shape profile at external surface and cylindrical profile at internal surface with projections 26. During the crimping process, the external sleeve 30 slides over the internal sleeve 20, either due to a translation movement and/or a rotational movement over the threads. The axial slots 24 provide a radial deformation capacity to internal sleeve 20. During the axial movement of the external sleeve 30 over the internal sleeve, the internal sleeve 20 will deform radially inward, it means the external surface profile of the internal sleeve 20 becomes cylindrical and its internal surface becomes conical.

It should be noted that the axial slots 25 provide a radial inward and outward deformation flexibility to the rear of internal sleeve. This flexibility makes the assembling process of the internal sleeve with the fitting body, and the external sleeve with internal sleeve easier.

At the same time the projections 26 maintain the pipe and avoid the risk that the crimping jeopardizes the insertion level of the pipe in the fitting. The inner projections preferably have different depths. The inner projections grip and maintain the pipe while the external sleeve is sliding on the internal sleeve. The projections allocate more deformation locally on the pipe which tend to a reliable connection without O-ring rubber joint.

During the crimping process the inner sleeve 20 will deform radially inward, in consequence the pipe also will deform to receive the deformed inner sleeve. The extra deformation occurs locally at projections T1, T2 and T3.

It should be noted that the pipe end is protected after crimping, contrarily to the prior art fitting in which it happens often that the end is not well concealed and the radial deformation often results that the internal layer can be exposed resulting in possible corrosion. This is particularly true for multilayer pipes.

In addition, the reduction of diameter of the internal sleeve 20 also results in a radial force pushing radially the external sleeve 30, to maintain the external sleeve 30 and preventing said sleeve to move backward.

It should be noted that the main body, the internal sleeve and the external sleeve are preassembled, so that a user just need two steps when connecting a pipe end and the press fitting of the invention: inserting the pipe, and driving axially the external sleeve over the internal sleeve. There is no need to pipe preparation or multi-body part assembling during installations.

Figure 6 shows a crimping tool 80 which is provided to move axially the external sleeve 30. The crimping tool 80 comprises a fixed part 81 to hold the filling during crimping. and a movable part 82. The movable part 82 is designed to push axially the external sleeve 30 so as to drive the external sleeve 30 over the internal sleeve 20.

The press fitting according to the invention requires much less energy to connect multilayer pipes in comparison with existent mechanical fitting, the amount of energy reduction is up to 80 %. This can reduce effort in manually operated device and energy consumption of powered by a driving device, irrespective as to whether it is electromechanically or hydraulic driven.

Contrary to a radially acting tool the tool of the invention acts in an axial direction and the space requirement in the radial direction can thus possibly be reduced as the effort the tool may undergo are minimized.

In addition, the press fitting and method of crimping of the present invention have great impact on the crimping tool, by reducing very considerably the weight of crimping tool to become lighter, more ergonomic, and increase its lifetime. In turn, this has great impact on health and performance of installer with lighter and more ergonomic tool.

## Claims

1. Press fitting for the connection of a pipe, comprising a main body (10) with a fitting support (15) extending in an axial direction along a central axis from a mechanical fitting portion (12) to a pipe insertion end side, an internal sleeve (20) and an external sleeve (30),
wherein the internal sleeve (20) and the fitting support defines a pipe insertion space for inserting a pipe end to be fixed on said fitting support,
wherein the external sleeve (30) is configured to move axially over the internal sleeve (20) towards the pipe insertion end side, said axial movement resulting in an inward radial force leading to the crimping of the pipe end against the fitting support.

2. Press fitting according to claim 1, wherein the external sleeve (30) is configured to slide axially over the internal sleeve and/or to rotate over the internal sleeve.

3. Press fitting according to the preceding claim, wherein the internal sleeve is configured to undergo a diameter reduction during axial movement of the external sleeve to translate the axial displacement of the external sleeve into an inward radial displacement of at least one, preferably several circumferential parts/portions of the internal sleeve to compress the internal sleeve against the pipe and the pipe against the fitting support.

4. Press fitting according to the preceding claim, wherein the external surface of internal sleeve (20) has a conical shape profile defining an angle Θ with respect to the axial direction, with a smaller diameter on an external sleeve rest position side, in particular the external sleeve rest position being on the fitting side and the larger diameter being on the pipe insertion end side.

5. Press fitting according to the preceding claim wherein the angle is chosen as a function of the diameter of the pipe to be connected, wherein for nominal diameters of 16 to 60 mm, the angle (Θ) can be varying from 1 to 25 °, preferably from 2° to 21°.

6. Press fitting according to any one of preceding claims, wherein the internal sleeve is provided with one or more axial slot(s), preferably regularly spaced apart from each other in the circumferential direction, most preferably the slots are distributed circumferentially at equidistance from each other.

7. Press fitting according to the preceding claim, wherein the length of the slots is depending on the distance between inner projections (26), and the width of slots depending on the angle (Θ).

8. Press fitting according to any one of the preceding claims, wherein the internal sleeve has an inner surface with a plurality of inner projections projecting towards the fitting body, preferably at different depths.

9. Press fitting according to any one of the preceding claims, wherein the external sleeve is designed to rotate over the internal sleeve via threads, in particular wherein the external sleeve has an outer external shape such as an hexagonal external shape able to cooperate with any type of standard tool.

10. Press fitting according to any one of the preceding claims, wherein the press fitting is preassembled with the internal sleeve and the external sleeve.

11. Press fitting according to any one of the preceding claims, wherein one or more stoppers are provided to fix the internal sleeve axially on the main body wherein the internal sleeve optionally is free to rotate around the central axis.

12. Press fitting according to any one of the preceding claims, wherein the external sleeve is positioned to the internal sleeve designed to receive the external sleeve via slots and a slight interface between the external sleeve and the internal sleeve.

13. Press fitting according to any one of the preceding claims, further comprising an abutting element for stopping the external sleeve in the crimping position, preferably the abutting element being located on the internal sleeve.

14. Press fitting according to any of the preceding claims, wherein the internal sleeve has an inner surface with a plurality of inner projections, the projections preferably with different depths, wherein the projections are adapted to grip and maintain the pipe while the external sleeve is sliding on the internal sleeve.

15. Method of connecting a press fitting with a pipe, comprising the steps of : 1) inserting the pipe into a pipe insertion space between a fitting support and an internal sleeve, 2) driving axially an external sleeve over the internal sleeve, so that the internal sleeve undergoes a diameter reduction during axial movement of the external sleeve to translate the axial displacement of the external sleeve into an inward radial displacement of the internal sleeve to compress the internal sleeve against the pipe and the pipe against the fitting support leading to the crimping of the pipe end against the fitting support wherein the step of driving axially the external sleeve over the internal sleeve comprises at least one of sliding the external sleeve over the internal sleeve and of rotating the external sleeve over the internal sleeve, towards the pipe insertion end side.

16. Tool for connecting a press fitting according to any of claims 1 to 14 with a pipe in a piping system for hot and cold-water installations inside buildings and/or to be used in a method according to claim 15, comprising a movable part and a fixed part, the fixed part being configured to maintain axially the internal sleeve of the press fitting, and the movable part being configured to push axially the external sleeve towards the fixed part in particular from the body side to the pipe side, so that the external sleeve slides and/or rotates over the internal sleeve.
